# EUROPEAN PATENT SPECIFICATION

(11) **EP 2 593 412 B1**
(45) Date of publication and mention of the grant of the patent: **05.01.2022**
(21) Application number: 11732447.5
(22) Date of filing: 13.07.2011
(51) Int. Cl.: C04B 26/04, C04B 26/06, C09D 5/03

(54) **REDISPERSIBLE DRY COMPOSITION OF POLYMER FINISHES**
REDISPERGIERBARE TROCKENE ZUSAMMENSETZUNG VON POLYMERFINISHERN
COMPOSITION SÈCHE REDISPERSIBLE D'ENDUITS DE FINITION POLYMÈRES

(30) Priority: 16.07.2010 WO PCT/EP2010/060337
(43) Date of publication of application: 22.05.2013
(73) Proprietor: Sika Technology AG, 6340 Baar (CH)
(72) Inventor: DANTIN, Véronique, F-38291 Saint Quentin Fallavier (FR); LEPLEY, Gérard, F-38291 Saint Quentin Fallavier (FR); GONCALO, Paulo, F-38291 Saint Quentin Fallavier (FR); NONES, Carlos, California 92507 (US); PAREDES, Pedro, California 92507 (US)
(74) Representative: Sika Patent Attorneys
(86) International application number: PCT/EP2011/062001
(87) International publication number: WO 2012/007529

(56) References cited:
- EP-A1- 1 182 235
- EP-A1- 1 593 721
- WO-A1-2010/069897
- WO-A2-01/77242
- CN-A- 101 481 584
- DE-A1- 19 601 699
- DE-C1- 19 910 602
- FR-A1- 2 930 258
- GB-A- 2 155 944
- JP-A- 2006 335 597
- US-A- 3 867 335

## Description

### Field of the Invention

The technical field of the invention relates to plasters, renderings, grouts, waterproofing coatings or mortars notably for the interior or exterior of buildings, such as finishes or mortars for the external thermal insulation as well as joints for the construction.

In particular, the invention concerns water-dispersible powder building material compositions useful for the preparation of wet formulations of plasters or mortars for the construction and the civil engineering industry.

More particularly, the invention refers to cement-free and lime-free and water-dispersible powder building material compositions comprising a homopolymer or a copolymer as binder.

The invention concerns also the methods of preparation of these dry compositions and wet formulations, the application of these latter onto the surface of buildings or civil engineering works, the so obtained coatings as well as the so coated elements. The applications of these wet formulations can be also joints or other products for the construction as well as mass objects.

### Background Art

Many liquid aqueous acrylic finishes are known. These are wet formulations containing an entirely organic binder made of an acrylic or styrene/acrylic or ethylene/vinylacetate polymer dispersion, a coalescent agent, a water retentive agent such as a cellulosic ether, a dispersant (e.g. a surfactant), a defoamer, a biocide, a carbonate sand and/or a silica sand, a carbonate filler, TiO2, a mineral or organic thickener, a pH regulator, exogenous water and water from the polymer dispersion.

The acrylic or styrene/acrylic polymer dispersion of these acrylic finishes are obtained by emulsion polymerisation.

These known acrylic finishes are ready-to-use pastes which are applied on the exterior surfaces of buildings.

One knows moreover redispersible powders of acrylic or styrene/acrylic polymer. These powders are produced by spray drying of a dispersion of this acrylic or styrene/acrylic polymer, including a water-soluble protective colloid such as polyvinyl alcohol and/or polyacrylates and/or polyvinyl pyrrolidone. See notably EP-723975-A and US5252704. These powders can be used in mortar formulations containing a mineral binder (cement and/or lime).

DE 196 01 699 discloses redispersible polymer powders based on water-insoluble polymers selected from among homo or copolymers of vinylesters, (meth)acryl acid esters, styrene, and vinylchloride as well as water-soluble protective colloid which can be deactivated by a change in pH. Use of such as redispersible polymer powders as binders in adhesives, renders, and paints are also described.

FR 2 930 258 discloses an aqueous composition comprising a superabsorber polymer, a thickener, a filler, and a binder which can be a poyacrylate, a copolymer of acrylate and styrene, a vinylic polymer or their mixtures or derivatives. The composition disclosed is said to be useful as a finishing render also having acoustic properties.

One of the drawbacks of these cement-free pastes is that they badly withstand the frost and especially the cycles frost/thaw and more generally the thermal shocks.

Other drawbacks linked to the aqueous character of these known acrylic finishes, is also that:
(i) The water represents an additional cost in terms in of transport.
(ii) The water imposes to load the pasty acrylic finish with high levels of biocide.

These features (i) and (ii) make these known acrylic finishes not really environment friendly.

### Summary of the invention

The present invention pursues at least one of the following objects.

It is an object of the invention to develop redispersible dry compositions of polymer finishes or of other products for the construction which would not have the drawbacks of the known aqueous pasty acrylic finishes or construction products.

It is an object of the invention to develop redispersible dry compositions of polymer finishes which would not be prone to induce efflorescence on the surface of plasters, renderings, coatings made from this composition.

It is an object of the invention to develop redispersible dry compositions of polymer finishes which would not have a highly basic pH after being redispersed into water, to manufacture wet formulations to be applied onto the surface of buildings or civil engineering works.

It is an object of the invention to develop redispersible dry compositions of polymer finishes which would not have an adverse effect on the processing properties (easiness and reproducibility of the mixing-workability-pumpability-non-tackiness-shotcreting-...) or on the mechanical characteristics (water-resistance-hardness-durability-cracking strength-..) of the hardened plasters, renderings, coatings made from these compositions.

It is an object of the invention to develop redispersible dry compositions of polymer finishes which could be mixed with water to manufacture wet formulations to be applied onto the surface of buildings or civil engineering works, to form hardened plasters, renderings or coatings, with protection and waterproofing properties.

It is an object of the invention to develop plasters, renderings, coatings with waterproofing and good-mechanical properties as well as protection, said plasters, renderings, coatings being obtained from dry compositions of polymer finishes easily redispersible in water.

It follows that the invention pertains to a redispersible dry cement-free and lime-free composition of polymer finish comprising:
a) a powdery organic binder included a polymer obtained by spray-drying or lyophilisation of a dispersion containing said polymer and a protective colloid which is a polyvinyl alcohol, or a low molecular weight surface active compound, or taken from the group of salts of arylsulfonic acid formaldehyde condensates;;
b) a deprotection agent chosen
   - among those which are effective without increasing the pH of the dispersion obtained by mixing said composition with water, to a value greater than or equal to 10 and preferably greater than or equal to 9,
   - and in the group of products consisting of glycol ethers, sodium triphosphate; the glycol ethers being more preferably in the group consisting of ethylene glycol monomethyl ether, ethylene glycol monoethyl ether, Ethylene glycol monopropyl ether, ethylene glycol monoisopropyl ether, (2-isopropoxy)ethanol, ethylene glycol monobutyl ether, ethylene glycol monophenyl ether, ethylene glycol monobenzyl ether, diethylene glycol monomethyl ether, 2-(2-methoxyethoxy)ethanol, methyl carbitol, diethylene glycol monoethyl ether, 2-(2-ethoxyethoxy)ethanol, carbitol, cellosolve, diethylene glycol mono-n-butyl ether, ethylene glycol dimethyl ether, ethylene glycol diethyl ether, ethylene glycol dibutyl ether, Ethylene glycol methyl ether acetate, ethylene glycol monethylether acetate, ethylene glycol monobutyl ether acetate, tripropylene glycol n-butyl ether, dipropylene glycol n-butyl ether, triethylene glycol monobutyl ether, propylene glycol;
   - the dry % mass ratio *specific filler c) *100* / *polymer a)* that is greater or equal to, in an increasing preference order, 10, 20, 30, preferably greater or equal to 50, more preferably greater or equal to 150, and lower or equal to, in a decreasing preference order, 1200, 1000, 950, preferably lower or equal to 910, more preferably lower or equal to 850;
c) a specific adsorbent filler whose oil absorption (OA) -according to ISO 787/5 and in g/100 g- is greater than or equal to, in an increased order of preference: 1; 5; 10; 20; the specific adsorbent filler c) being selected in the aluminosilicates, calcareous or marble fillers and mixes thereof;
d) optionally a load;
e) optionally a water retentive agent;
f) optionally a rheological agent;
g) optionally a defoamer;
h) optionally a biocide;
i) optionally a pigment.
j) optionally fibers
k) optionally a flame retardant (or flame proof agent).

The redispersible dry composition according to the invention, is characterized by the water-resistance of a coating obtained from a slurry made by mixing of the dry composition with water to the correct consistency with respect to the whole mix water/dry composition, said water-resistance of the coating being measured according to the test ASTM D2486-06, is greater than, in an increased order of preference, 3000 ; 4000 ; 5000 ; 6000 ; 10000 cycles.

The thickness of the coating in the above mentioned test could vary from the one of ASTM D2486-06 norm. The thickness could increase if the granulometry of the largest load is greater to the 180 microns requested in the ASTM D2486-06. The thickness of the coating should then correspond to the maximum diameter of the largest load.

The « correct consistency » could be for instance determined by comparison with the following products:
- floor grout 5046 Elit from Parexlanko, mixed with water to a 27% (+/- 1%) water mix ratio (for floor joint fillers);
- DPR Sandfine from the Parex company (for acrylic renders)
- 451 Lankotoit from the Parexlanko company (for roof waterproofing membranes)

In a particular embodiment, the redispersible dry composition of polymer finish according to the invention, comprise:
a) a powdery organic binder included a polymer obtained by spray-drying or lyophilisation of a dispersion containing said polymer and a protective colloid;
b) a deprotection agent;
c) a specific adsorbent filler;
d) a load;
e) a water retentive agent;
f) optionally a rheological agent;
g) optionally a defoamer;
h) optionally a biocide;
i) optionally a pigment.

This composition fulfils at least one of the above mentioned objects.

It is to the credit of the inventors to have designed a redispersible powder dry composition of plaster, mortar, rendering or finish, which is to address to the problem of redispersion in water of polymer-binded coatings or mass objects which are normally only water-resistant when resulting from alkaline aqueous slurries whose pH are greater than 10, especially greater than or equal to 11, and preferably to 12. Now, pH>12 are synonymous of formation of a powdery deposit on the surface of bodies, masonry units, etc., following a loss of water in open air (efflorescence).

In particular, the inventors succeeded in obtaining a dry composition which can be easily and rapidly transformed into a wet formulation, a slurry, the pH of which is below 10, preferably below 9, by mixing with a liquid, e.g. water.

It is then possible to get a coating or a mass object from this slurry. Said coating is advantageously water-resistant and not subject to efflorescence.

Water-resistance is a very interesting property of the coatings or of the mass objects which are the results of pH<10 slurries obtained from mixes of water and dry compositions according to the invention. The water-resistance can be notably given by the wet scrub test and the drip test hereinafter defined.

This result has been obtained notably by incorporating into the dry composition, at least a deprotection agent b) and at least a specific adsorbent filler c).

Such a dry powder composition makes it also possible to overcome the drawbacks of water in the known wet polymer finish formulations, namely strength to thermal shocks, biological instability and cost of transport.

Once redispersed in water, the dry composition forms a wet formulation with good properties of rheology, pumpability, workability, and durability.

And the hardened water-resistant and non-efflorescent coatings or the water-resistant and non-efflorescent joints or other mass objects obtained from this wet formulation have remarkable mechanical properties (hardness-cracking strength), and/or fireproofing and waterproofing properties, and/or decoration properties.

### Definitions

According to the terminology of this text, the following non limitative definitions have to be taken into consideration:
- Every singular designates a plural and reciprocally.
- "*polymer*" refers to homopolymer or copolymer.
- "*finish*" refers to any product for the construction (interior or exterior), *e.g.* : coatings, joints, mass objects...
- The term "*redispersible*" or "*redispersibility*" used herein is taken to mean that the composition, if present in dry form, in particular as dry powder, is redispersible in aqueous media, in particular in water itself. This requirement of redispersibility is complied with by a re-obtained dispersion which is stable for preferably at least about 2 hours, in particular at least about 12 hours, and under ideal conditions more than 24 hours. In other words, there will not occur a significant precipitation. For the determination of such redispersibility the following method could preferably be employed: 50g of an essentially lump-free powder are mixed with 50g water in a beaker of a diameter of 8 cm and a maximum filling volume of 300 cm³. Stirring is performed with a propeller mixer (3 propellers and a standard diameter of 60 mm) with 1.000 rpm. The dispersion obtained is visually evaluated after 5, 10, 15, 30 minutes, and 1, 2, 3 hours respectively.
- "*deprotection agent*" refers to a compound or a mix of compounds which can wipe out at least one part of the protective effect of the protective colloid of the powdery organic binder a).
- "*cement*" is a mineral binder, free from any organic compound.
- "*cement-free*" means that the cement concentration is lower or equal to, in a increasing preference order and in % by weight of the composition, 5 ; 3 ; 1 ; 0,5 ; 10⁻¹; 10⁻¹; 10⁻⁶.
- "*lime-free*" means that the lime concentration is lower or equal to, in a increasing preference order and in % by weight of the composition, 5 ; 3 ; 1 ; 0,5 ; 10⁻¹ ; 10⁻³ ; 10⁻⁶.
- "*granulometry*" corresponds to the dry sieving D₅₀.
- The granulometry of a "*powder*" is less or equal to 1 mm,
- The granulometry of a "*granulate*" is greater than 1 mm, preferably less or equal to 10 mm.
- "*Filler*" designates a fine and/or light mineral powdery loading material incorporated in the mortars, plasters, renderings or finishes, and the Dso of which is lower than 100 µm.
- "*Load*" designates a mineral powdery loading material incorporated in the mortars, plasters, renderings or finishes, and the D₅₀ of which is greater than 100 µm.
- "*Acrylic*" refers to homopolymers or copolymers formed of monomers selected from the group of acrylate esters.

### Detailed description of the invention

The powder dry composition according to the invention is cement-free and lime-free.

### Powdery organic binder a):

The polymer of the binder a) is preferably chosen from the group comprising, preferably consisting of: acrylic, acrylic/acrylic, styrene/acrylic, styrene/butadiene, vinylacetate/ethylene, vinyl-acetate/versatate and vinyl-acetate/versatate/ethylene polymer; the acrylic, acrylic/acrylic, styrene/acrylic polymer being preferred.

In a variant, the binder a) can comprise a combination of different polymers.

The protective colloid of the binder a) is a polyvinyl alcohol, or a low molecular weight surface active compound, or taken from the group of salts of arylsulfonic acid formaldehyde condensates (U.S. Pat. No. 5,225,478).

### Deprotection agent b)

The deprotection agent b) is chosen among those which are effective without increasing the pH of the dispersion obtained by mixing said composition with water, to a value less or equal to 10 and preferably to 9.

Regarding the quantitative aspect of the composition according to the invention, it is preferable that the dry % mass ratio *deprotection agent b)*100* / *polymer a)* be greater or equal to, in an increasing preference order, 1, 8, 10, 15, 20, 30, preferably comprised between 15 and 25.

Actually, the deprotection agent b) is e.g. chosen in the group of products comprising, preferably consisting of glycol ethers, sodium triphosphate, the glycol ethers being more preferably chosen in the group of products comprising, preferably consisting of ethylene glycol monomethyl ether, ethylene glycol monoethyl ether, Ethylene glycol monopropyl ether, ethylene glycol monoisopropyl ether(2-isopropoxy)ethanol, ethylene glycol monobutyl ether , ethylene glycol monophenyl ether, ethylene glycol monobenzyl ether, diethylene glycol monomethyl ether 2-(2-methoxyethoxy)ethanol, methyl carbitol, diethylene glycol monoethyl ether 2-(2-ethoxyethoxy)ethanol, carbitol cellosolve, diethylene glycol mono-n-butyl ether, ethylene glycol dimethyl ether, ethylene glycol diethyl ether, ethylene glycol dibutyl ether, Ethylene glycol methyl ether acetate, ethylene glycol monethylether acetate, ethylene glycol monobutyl ether acetate tripropylene glycol n-butyl ether, dipropylene glycol n-butyl ether, triethylene glycol monobutyl etherpropylene glycol.

### Specific adsorbent filler c)

The specific adsorbent filler c) is "specific" with respect to its "adsorption capacity" and/or to its oil absorption (OA). The specific adsorbent filler c) has an oil absorption (OA) according to ISO 787/5 and in g / 100 g: OA greater than or equal to, in an increased order of preference: 1; 5; 10; 20, and for example comprised between 5 and 10.

Said specific adsorbent filler c) is selected among siliceous, calcareous or siliceouscalcareous powders and/or aluminosilicate powders, and more preferably in the calcareous or marble fillers, and, more preferably in the group consisting of the following commercial products:
- beatite^{®} : A carbonated load obtained from a "Pyrenean" calcite with a high chemical purity;
- Omyacarb^{®}: A dry ground Calcium Carbonate with an intermediate and closely sized particle distribution;
- Mikhart^{®} is a Calcium Carbonate and is produced by sieving or grinding the mineral Calcite.
- Omya TITAN^{®} 200; Calcium Carbonate 97% Magnesium Carbonate 2% Median Diameter : 25 µm;
- CALCITEC PURO PH ^{®} : Calcium Carbonate produced through careful selection both in the mining and in the production stages, where dedicated lines are used to ensure high chemical purity characterized by a low content of heavy metals

### Load d)

Concerning the load d), it is advantageously chosen from the group of calcareous and/or siliceous sands, and/or perlite and/or vermiculite.

### Water retentive agent e)

The water retentive agent e) has the property to keep the water of mixing before the setting. The water is so trapped in the wet formulation paste which improves its bond. To some extent, the water is less absorbed by the support. Salting out on the surface is limited and evaporation is reduced.

The water retentive agent e) is preferably chosen in the group comprising: modified cellulose ethers and/or starches ethers and/or guar ether and their mixes, more preferably consisting of: methylcelluloses, methylhydroxypropylcelluloses, methylhydroxyethylcelluloses and their mixes.

The possible rheological agent f) (also named a "thickener") is preferably chosen in the group comprising, more preferably consisting of : clays, starch ethers, cellulose ethers and/or gums (e.g. Welan guar xanthane, succinoglycans), modified polysaccharides - preferably among modified starch ethers-, polyvinylic alcohols, polyacrylamides, clays, sepiolites, bentonites, and their mixes, and more preferably chosen in the group of clays, bentonite, montmorillonite.

The possible defoamer g) is preferably chosen in the group comprising, more preferably consisting of: polyether polyols and mixes thereof.

The possible biocide h) is preferably chosen in the group comprising, more preferably consisting of: mineral oxides like zinc oxide and mixes thereof.

The possible pigment i) is preferably chosen in the group comprising, more preferably consisting of: TiO2, iron oxide and mixes thereof.

The possible fibers j) are preferably chosen in the group comprising, more preferably consisting of fibers of polyamid, polyacrylonitrile, polyacrylate, cellulose, polypropylene, glass, sisal, or hemp and their mixes.

The possible mineral binder k) is preferably chosen in the group comprising, more preferably consisting of: portland cement, calcium aluminate cement, calcium sulphate and their mixes.

The possible flame retardant (or flame proof agent), which makes it possible to increase the fire resistance and/or to shrink the speed of flame spreading of the composition is preferably chosen in the group comprising, more preferably consisting of:
▪ minerals preferably aluminium hydroxide [Al(OH)3, ATH], magnesium hydroxide MDH, hydromagnesite, hydrates, red phosphorus, and boron compounds, preferably borates,
▪ organohalogen compounds, preferably organochlorines and more preferably such as chlorendic acid derivatives and chlorinated paraffins; organobromines such as decabromodiphenyl ether (decaBDE), decabromodiphenyl ethane,
▪ polymeric brominated compounds preferably brominated polystyrenes, brominated carbonate oligomers (BCO's), brominated epoxy oligomers (BEO's), tetrabromophthalic anyhydride, Tetrabromobisphenol A(TBBPA) and hexabromocyclododecane (HBCD).
▪ antimony preferably pentoxide and sodium antimonite
▪ organophosphorus compounds preferably organophosphate, TPP, RDP, BPADP, tri-o-cresyl phosphate,
▪ phosphonates preferably DMMP and phosphinates.
▪ chlorophosphates like TMCP and TDCP.

The composition according to the invention can also comprise some optional functional ingredients like
- air-entraining agents (surfactants e.g. natural resins, sulfated or sulfonated compounds, synthetic detergents, organic fatty acids and their mixes, preferably among the lignosulfonates, the basic soaps of fatty acids and their mixes, and, more preferably in the group comprising the sulfonate olefins, the sodium lauryl sulfate de sodium and their mixes;
- accelerators (calcium salts, carbonates, preferably lithium or sodium and their mixes);
- retarders (tartric acid and its salts: sodium or potassium salts, citric acid and its salts: sodium (trisodic citrate) and their mixes;

As regards the quantitative data, the dry powder redispersible composition according to the invention can be the following, in percent by weight and in an increased preference order:
∘ 1 ≤ binder a) ≤ 40 ; 1 ≤ binder a) ≤ 30 ; 5 ≤ a) ≤ 25 ; 6 ≤ a) ≤ 20; 8 ≤ a) ≤ 15;
∘ 0,1 ≤ deprotection agent b) ≤ 10; 0,5 ≤ b) ≤ 8 ; 0,8 ≤ b) ≤ 5 ; 1 ≤ b) ≤4;
∘ 1 ≤ specific adsorbent filler c) ≤ 85 ; 1 ≤ specific adsorbent filler c) ≤ 75 ; 5 ≤ c) ≤ 70 ; 15 ≤ c) ≤ 60 ; 25 ≤ c) ≤50 ;
∘ 10 ≤ load d) ≤ 90 ; 20 ≤ d) ≤ 80 ; 30 ≤ d) ≤ 70 ; 40 ≤ d) ≤ 60;
∘ 0,001 ≤ water retentive agent e) ≤ 5; 0,01 ≤ e) ≤ 3 ; 0,05 ≤ e) ≤ 1; 0,08 ≤ e) ≤ 1;
∘ 0,001 ≤ rheological agent f) ≤ 5 ; 0,05 ≤ f) ≤ 3 ; 0,08 ≤ f) ≤ 3 ; 0,1 ≤ f) ≤ 2
∘ 0,01 ≤ defoamer g) ≤ 5 ; 0,05 ≤ g) ≤ 3 ; 0,1 ≤ g) ≤ 2 ; 0,2 ≤ g) ≤ 1;
∘ 0,001 ≤ biocide h) ≤ 5; 0,01 ≤ h) ≤ 3 ; 0,05 ≤ h) ≤ 1; 0,08 ≤ h) ≤ 1
∘ 0;01 ≤ pigment i) ≤ 9 ; 0,05 ≤ i) ≤ 3 ; 0,1 ≤ i) ≤ 2; 0,2 ≤ i) ≤ 1

Also described, but not according to the invention, is a wet formulation obtained by mixing water with the redispersible dry composition of polymer finish as above defined, said formulation being preferably plasters, renderings, finishes, grouts, waterproofing coatings or mortars. The mixing is done by any appropriate device known in the art. The mixing time is e.g. 1 to 30 min, or even 3 to 10 min.

The water content of such a wet formulation is preferably comprised between, increasing order of preference and in % by weight of the wet formulation, 5-50 ; 10-40 ; 15-25.

Also described, but not according to the invention, is the application of the wet formulation as above defined onto the surface of buildings or civil engineering works to produce coatings.

Also described, but not according to the invention, is the buildings or civil engineering works or coatings applied thereon or finishes, obtained from the wet formulation as above defined.

The coatings and the mass works or objects obtained from the redispersible powder polymer composition according to the invention have good application properties.

In particular, the coatings according to the invention produce good results in the usual assessment tests, namely: impact resistance, wet scrub resistance 7 day cure, mandrel bend test 7 day cure, tinting strength, QUV test (accelerated weathering) and drip-test measuring the water-resistance in terms of redispersibility, hardness, colour stability, abrasion resistance and texture appearance.

### EXAMPLES

### -I- Raw materials

**a)** powdery organic binder:
   (a.1) redispersible powder acrylic polymer commercialized by ELOTEX under the name WR8600
   (a.2) redispersible powder styrene/acrylic polymer commercialized by BASF under the name ACRONAL^{®} S695P
   (a.3) redispersible powder acrylic polymer commercialized by WACKER^{®} under the name Vinnapas^{®}1540 N
   (a.4) redispersible powder Vinylacetate / Ethylene polymer commercialized by WACKER^{®} under the name Vinnapas^{®}5010 N
**b)** Deprotection agent:
   Triethylene glycol monobutyl ether: commercialized by Münzig under the name Metolat^{®} 872P. content of triethylene glycol monobutyl ether in the powder : 25 to 50%.
**c)** Specific adsorbent filler:
   (c.1) calcareous filler commercialized by Omya^{®} under the name Beatite^{®} 30
   (c.2) calcareous filler commercialized by Omya^{®} under the name Hydrocarb^{®} -OG
**d)** a load:
   (d.1) calcareous sand commercialized by la provençale^{®} under the name Calgar^{®}
   (d.2) siliceous sand commercialized by Sibelco France under the name N14
   (d.3) calcareous sand commercialized by Omya^{®} under the name Durcal^{®} 130
**e)** a water-retentive agent:
   cellulosic ether: commercialized by Dow^{®} chemicals under the name Methocel^{®}
**f)** rheological agent:
   (f.1) sepiolite commercialized by TOLSA^{®} under the name Pangel^{®} S9
   (f.2) silicate mineral commercialized by Rio Tinto Minerals^{®} under the name Talc de Luzenac
**g)** defoamer:
   (g.1) polyglycols commercialized by MUNZIG under the name Agitan P823
   (g.2) polyethers polyols commercialized by KERNEOS^{®} under the name Peramin^{®} defoam 50 PE
**h)** biocide:
   zinc oxyde commercialized by Troy^{®} under the name Troysan^{®} CP 20
**i)** pigment:
   (i.1) TiO2, commercialized by TWT under the name Titanpol R03
   (i.2) Iron oxide commercialized by TWT under the name Noir 318
   (i.3) Sodium alumino-silicate commercialized by holidays pigments under the name Bleu outremer 03
**j)** fibers:
   (j 1) cellulosic fiber commercialized by JRS^{®} under the name Arbocel B00
   (j2) polyacrylonitrile fibers commercialized by STW^{®} under the name PAC243/125
**k)** mineral binders
   (k1) Calcium Aluminate Cement commercialized by Kerneos^{®} under the name Ternal RG
   (k2) Calcium Sulfate binder commercialized by Maxit^{®} under the name Anhydrite micronisée Micro A
**l)** and/or a flame retardant (or flame proof agent):
   aluminium hydroxide commercialized by Sibelco^{®} under the name portaflame SG 200

### -II- Method

The redispersible powder compositions of the examples are prepared as follows:
Each raw material is weighed according to the proportions of the compositions given below in the point III, then introduced into a classical powder mixer. The mixing time varies between 45 sec. and 10 minutes depending on the composition and on the mixer's efficacy.

### -III- The compositions

### III.1 Renders, plasters

In % by weight

**Example Formula 1**

| | |
|---|---|
| d.1 | 50 |
| c.1 | 32 |
| a1 | 11 |
| i1 | 3 |
| b | 2,2 |
| f1 | 1 |
| g1 | 0,4 |
| e | 0,1 |
| h | 0,1 |
| TOTAL | 100 |

**Example Formula 2**

| | |
|---|---|
| d.2 | 50 |
| c.1 | 34,8 |
| a.1 | 12 |
| b | 3 |
| e | 0,2 |
| TOTAL | 100 |

**Example Formula 3**

| | |
|---|---|
| c.1 | 44,6 |
| d.2 | 29 |
| d.1 | 12 |
| a2 | 10 |
| b | 2 |
| i.1 | 1,25 |
| f1 | 0,5 |
| g2 | 0,5 |
| e | 0,15 |
| TOTAL | 100 |

**Example Formula 4**

| | |
|---|---|
| c.1 | 44,13 |
| d.2 | 30 |
| d.1 | 12 |
| a.1 | 9 |
| b | 4,8 |
| e | 0,07 |
| TOTAL | 100 |

**Example Formula 5**

| | |
|---|---|
| c.1 | 63,4 |
| a.3 | 25 |
| i.1 | 4 |
| b | 3,5 |
| f.1 | 3 |
| g.2 | 0,7 |
| e | 0,4 |
| TOTAL | 100 |

**Example Formula 6**

| | |
|---|---|
| d.1 | 50 |
| c.1 | 17,2 |
| 1 | 15 |
| a.1 | 11 |
| i.1 | 3 |
| b | 2,2 |
| f.1 | 1 |
| g.1 | 0,4 |
| e | 0,1 |
| h | 0,1 |
| TOTAL | 100 |

### III.2 Grouts

**Example Formula 7**

| | |
|---|---|
| c.1 | 77,375 |
| a.1 | 12 |
| f.2 | 5 |
| b | 2,4 |
| i.1 | 2 |
| j.1 | 1 |
| i.2 | 0,2 |
| i.3 | 0,025 |
| TOTAL | 100 |

**Example Formula 8**

| | |
|---|---|
| c.1 | 80 |
| a.1 | 12 |
| f.2 | 5 |
| i.1 | 2 |
| j.1 | 1 |
| b | 0 |
| TOTAL | 100 |

**Example Formula 9**

| | |
|---|---|
| c.2 | 45 |
| c.1 | 40,6 |
| a.1 | 12 |
| b | 2,4 |
| TOTAL | 100 |

**Example Formula 10**

| | |
|---|---|
| c.2 | 76 |
| a.1 | 20 |
| b | 4 |
| TOTAL | 100 |

**Example Formula 11**

| | |
|---|---|
| d.3 | 60 |
| c.1 | 32 |
| a.4 | 6 |
| b | 1 |
| j2 | 1 |
| TOTAL | 100 |

**Example Formula 12**

| | |
|---|---|
| d.3 | 60 |
| c.1 | 34 |
| a.4 | 4 |
| b | 1 |
| j2 | 1 |
| TOTAL | 100 |

**Example Formula 13**

| | |
|---|---|
| d.3 | 60 |
| c.1 | 31 |
| a.4 | 8 |
| j.2 | 1 |
| b | 0 |
| TOTAL | 100 |

### III.3 Waterproofing

**Example Formula 14**

| | |
|---|---|
| c.1 | 57,5 |
| a.1 | 40 |
| b | 2 |
| f.1 | 0,5 |
| TOTAL | 100 |

**Example Formula 15**

| | |
|---|---|
| c.1 | 75,5 |
| a.1 | 20 |
| b | 4 |
| f.1 | 0,5 |
| TOTAL | 100 |

**Example Formula 16**

| | |
|---|---|
| c.1 | 77,5 |
| a. 1 | 20 |
| b | 2 |
| f.1 | 0,5 |
| TOTAL | 100 |

### 111.4 Formula containing mineral binders

**Example Formula 17**

| | |
|---|---|
| d.1 | 50 |
| c. 1 | 31,2 |
| a.1 | 11 |
| i.1 | 3 |
| b | 2,2 |
| k.1 | 1 |
| f.1 | 1 |
| g | 0,4 |
| e | 0,1 |
| h | 0,1 |
| TOTAL | 100 |

**Example Formula 18**

| | |
|---|---|
| d.3 | 60 |
| c.1 | 27 |
| a.4 | 6 |
| k.2 | 5 |
| b | 1 |
| j2 | 1 |
| TOTAL | 100 |

### -IV- Application properties

### IV.1 Preparation of the samples

The final product is got by mixing of the powder with some water or inversely, till the obtaining of a homogeneous paste. The water contents for the above mentioned formulas according to the examples are:

| | | |
|---|---|---|
| Formula 1: 19% +- 1% | Formula 7: 20%+- 1% | Formula 13: 25%+-1% |
| Formula 2: 16%+-1% | Formula 8: 16%+-1% | Formula 14: 30%+- 1% |
| Formula 3: 17%+-1% | Formula 9: 24%+-1% | Formula 15: 19%+-1% |
| Formula 4: 16%+-1% | Formula 10: 31%+-1% | Formula 16: 16%+-1% |
| Formula 5: 21%+-1% | Formula 11: 25%+-1% | Formula 17: 30%+- 1% |
| Formula 6: 20% +- 1% | Formula 12: 25%+-1% | Formula 18: 22%+- 1% |

### IV.2 The tests

a) DRIP TEST
   - Goal:
      This test aims at determining the water-resistance of the compositions according to the invention, in terms of redispersibility, hardness, colour stability, abrasion resistance and texture appearance.
      In this respect, a "*driptest*" device was set up to simulate the impact of a rain shortly after application. Low mineral content water will hence be used. Two commercial products (acrylic renders in pail) which stand for our references, have undergone the test first, to determine test duration and the minimum curing time required before running the experiment. Then, those data may differ accordingly with the nature of the products tested.
   - Drip test principle for acrylic renders:
      Deposits will undergo a constant drip of deionised water, after the determined curing times (4 to 8 hours for acrylic renders) over 30 and 60 minutes.
      Flow: 9-12 ml/min
      Waterfall height: around 23 cm
      Device and settings: Watson-Marlow Limited, 313 Ambient 5C to 40C/41F to 104F / On time secs = 1.5 / Off time secs = 2.0
   - The following points will then be checked out:
      - Abrasion resistance: if the impact of water drops damages the surface (erosion), abrasion resistance under water is considered as poor (marked as "*Yes*")*.*
      - Colour stability: after rain, the sample is bound to dry again without any spots or whitening appearing on the surface.
      - Recovery: Sample should recover its hardness and texture appearance after re-drying.
      - Redispersibility: right after the driptest, the deposit is checked by scrubbing the surface with a finger (light pressure). As the samples are tinted, redispersibility of the material is determined by the presence of coloured water on the gloves (marked as "*Yes*")*.*
b) WET SCRUB RESISTANCE 7 DAYS CURE
   Test valuate washability and wet abrasion resistance of a material. The tests reciprocate a wet abrasion force linear over the sample: according Standard ASTM D2486-06 Standard Test Methods for water Scrub Resistance of Wall Paints. The thickness of the finish in the above mentioned test could vary from the one of ASTM D2486-06 norm. The thickness could increase if the granulometry of the largest load is greater to the 180 microns requested in the ASTM D2486-06. The thickness of the finish should then correspond to the maximum diameter of the largest load.
c) MANDREL BEND TEST 7 DAYS CURE
   The Mandrel Bend Test covers the determination of the resistance to cracking (flexibility) of an organic coatings applied on substrates of sheet metal. The coating materials under test are applied at uniform thickness to panels of sheet metal. After drying the coated panels are bent over a mandrel and the resistance to cracking of the coating is determined. The noted value is the diameter of the cylinder for which there is no crack.
d) TINTING STRENGTH
   Tinting strength is a test which makes it possible to check the colouring capacity of pigments in a given composition. Identical quantities of pigments are introduced in a control composition (here a pasty acrylic finish) and in the sample according to the invention (to be tested). The two-coloured compositions are applied onto a standard support and dried. The tinting strength is measured by a spectrophotometer to determine the cie Lab* and the ΔE (difference of tint between) according to the standard ASTM E-308. If ΔE is less than 1.5, the tints are considered as identical.
e) QUV ACCELERATED WEATHERING
   The QUV test method is a cyclic ultraviolet weathering procedure. The particular test equipment uses a UV energy source that consists of eight 40-W fluorescent lamps with an emission range of 280 to 350 nm, with continuous peak output at 310 NM. The fluorescent lamps emit UV radiation that emulates the intensity of mid-day June sunlight in Florida. During the exposure tests, oxygenated water is applied to the test samples by condensation, rather than by spray. The water supply is heated in a vented tank below the test racks and lamps. To control the cyclic tests, the QUV is equipped with a variable interval timer that alternates the UV and the condensation at 43° C followed by 8 hours UV radiation at 60° C and high humidity.

### IV.3 Renders, plasters results

| **TESTING PARAMETERS** | **PAREX DPR SAND FINE** | **FORMULA** 1 |
|---|---|---|
| Drip test 24-HRS | No erosion colour stability | No erosion colour stability |
| DRIP TEST (AFTER 4 HRS) | No erosion colour stability | No Erosion colour stability |
| | | |
| SCRUB RESISTANCE 7 DAYS CURE | 8,000 + | 8,000 + |

| | CYCLES | CYCLES |
|---|---|---|
| MANDREL BEND TEST 7 DAYS CURE | 3/16" inch | ¼'inch |
| TINTING STRENGTH | Same colour | Same colour |
| QUV ACCELERATED WEATHERING | | |
| 500 HRS | Colour stability | Colour stability |
| 2,000 HRS | Colour stability | Colour stability |

| | | |
|---|---|---|
| PAREX DPR SAND FINE = trade composition of pasty acrylic finish commercialized in the USA by the PAREX^{®} company = control. | | |

### IV.4 Grouts results

| TESTING PARAMETERS | Scrub Resistance 24 Hours Cure | Scrub Resistance 7 Days Cure |
|---|---|---|
| Formula 7 | >10000 cycles | >10000 cycles |
| Formula 8 | 2300 cycles | 2500 cycles |
| Formula 9 | >10000 cycles | >10000 cycles |
| Formula 10 | >10000 cycles | >10000 cycles |
| Formula 11 | - | >10000 cycles |
| Formula 12 | - | 4500 cycles |
| Formula 13 | - | 600 cycles |

### IV. 5 Waterproofing results

| TESTING PARAMETERS | Formula 14 | Formula 15 | Formula 16 |
|---|---|---|---|
| Scrub Resistance 24 Hours Cure | >17000 cycles | >17000 cycles | >17000 cycles |
| Scrub Resistance 7 Days Cure | >17000 cycles | >17000 cycles | >17000 cycles |

### IV. 6 Mineral binders results

| TESTING PARAMETERS | pH value |
|---|---|
| Formula 17 | 9,6 |
| Formula 18 | 6,9 |

## Claims

1. Redispersible dry cement-free and lime-free composition of polymer finish, wherein cement-free and lime-free means that the cement concentration or lime concentration is lower or equal than 5 weight-%, the polymer finish comprising:
a) a powdery organic binder including a polymer obtained by spray-drying or lyophilisation of a dispersion containing said polymer and a protective colloid which is a polyvinyl alcohol, or a low molecular weight surface active compound, or taken from the group of salts of arylsulfonic acid formaldehyde condensates;
b) a deprotection agent chosen
- among those which are effective without increasing the pH of the dispersion obtained by mixing said composition with water, to a value greater than or equal to 10 and preferably greater than or equal to 9,
- and in the group of products consisting of glycol ethers, sodium triphosphate; the glycol ethers being more preferably in the group consisting of ethylene glycol monomethyl ether, ethylene glycol monoethyl ether, Ethylene glycol monopropyl ether, ethylene glycol monoisopropyl ether, (2-isopropoxy)ethanol, ethylene glycol monobutyl ether, ethylene glycol monophenyl ether, ethylene glycol monobenzyl ether, diethylene glycol monomethyl ether, 2-(2-methoxyethoxy)ethanol, methyl carbitol, diethylene glycol monoethyl ether, 2-(2-ethoxyethoxy)ethanol, carbitol, cellosolve, diethylene glycol mono-n-butyl ether, ethylene glycol dimethyl ether, ethylene glycol diethyl ether, ethylene glycol dibutyl ether, Ethylene glycol methyl ether acetate, ethylene glycol monethylether acetate, ethylene glycol monobutyl ether acetate, tripropylene glycol n-butyl ether, dipropylene glycol n-butyl ether, triethylene glycol monobutyl ether, propylene glycol;
- the dry % mass ratio *specific filler c) *100* /*polymer a)* that is greater or equal to, in an increasing preference order, 10, 20, 30, preferably greater or equal to 50, more preferably greater or equal to150, and lower or equal to, in a decreasing preference order, 1200, 1000, 950, preferably lower or equal to 910, more preferably lower or equal to 850;
c) a specific adsorbent filler whose oil absorption (OA) -according to ISO 787/5 and in g/100 g- is greater than or equal to, in an increased order of preference: 1; 5; 10; 20; the specific adsorbent filler c) being selected in the aluminosilicates, calcareous or marble fillers and mixes thereof;
d) optionally a load;
e) optionally a water retentive agent;
f) optionally a rheological agent;
g) optionally a defoamer;
h) optionally a biocide;
i) optionally a pigment.
j) optionally fibers
I) optionally a flame retardant (or flame proof agent).

2. Redispersible dry composition of polymer finish according to claim 1 comprising:
a) a powdery organic binder included a polymer obtained by spray-drying or lyophilisation of a dispersion containing said polymer and a protective colloid;
b) a deprotection agent;
c) a specific adsorbent filler;
d) a load;
e) a water retentive agent;
f) optionally a rheological agent;
g) optionally a defoamer;
h) optionally a biocide;
i) optionally a pigment.

3. A composition according to claim 1, wherein the binder a) is a homopolymer or copolymer chosen from the group comprising, preferably consisting of: acrylics, styrene/acrylic, styrene/butadiene, vinyl-acetate/ethylene, vinyl-acetate/versatate and vinylacetate/versatate/ethylene polymer, acrylic /acrylic copolymer being preferred.

4. A composition according to any of the preceding claims, wherein the dry % mass ratio *deprotection agent b)*100* /*polymer a)* is greater or equal to, in an increasing preference order, 1, 8, 10, 15, 20, 30, preferably comprised between 15 and 25.

5. A composition according to any of the preceding claims, wherein the load d) is chosen from the group of calcareous and/or siliceous sands and/or vermiculite and/or perlite.

## Patentansprüche

1. Redispergierbare trockene zementfreie und kalkfreie Polymerdeckanstrichzusammensetzung, wobei zementfrei und kalkfrei bedeutet, dass die Zementkonzentration oder Kalkkonzentration kleiner gleich 5 Gewichts-% beträgt, wobei der Polymerdeckanstrich Folgendes umfasst:
a) ein pulverförmiges organisches Bindemittel, das ein Polymer aufweist, das durch Sprühtrocknen oder Gefriertrocknen einer Dispersion erhalten wird, die das Polymer und ein Schutzkolloid enthält, bei dem es sich um einen Polyvinylalkohol oder eine niedermolekulare oberflächenaktive Verbindung handelt oder das aus der Gruppe von Salzen von Arylsulfonsäure-Formaldehyd-Kondensaten gewählt wird;
b) ein Entschützungsmittel, ausgewählt
- aus den Mitteln, die wirksam sind, ohne dass sie den pH-Wert der Dispersion, die durch Mischen der Zusammensetzung mit Wasser erhalten wird, auf einen Wert von größer gleich 10 und vorzugsweise größer gleich 9 erhöhen,
- und aus der Gruppe von Produkten, die aus Glycolethern, Natriumtriphosphat besteht; wobei die Glycolether bevorzugter aus der Gruppe stammen, die aus Ethylenglycolmonomethylether, Ethylenglycolmonoethylether, Ethylenglycolmonopropylether, Ethylenglycolmonoisopropylether, (2-Isopropoxy)ethanol, Ethylenglycolmonobutylether, Ethylenglycolmonophenylether, Ethylenglycolmonobenzylether, Diethylenglycolmonomethylether, 2-(2-Methoxyethoxy)ethanol, Methylcarbitol, Diethylenglycolmonoethylether, 2-(2-Ethoxyethoxy)ethanol, Carbitol, Cellosolve, Diethylenglycol-mono-n-butylether, Ethylenglycoldimethylether, Ethylenglycoldiethylether, Ethylenglycoldibutylether, Ethylenglycolmethyletheracetat, Ethylenglycolmonoethyletheracetat, Ethylenglycolmonobutyletheracetat, Tripropylenglycol-n-butylether, Dipropylenglycol-n-butylether, Triethylenglycolmonobutylether, Propylenglycol besteht;
- wobei das Verhältnis als Prozentsatz der Trockenmasse *spezieller Füllstoff c) *100* / *Polymer a)* größer gleich, in aufsteigender Reihenfolge der Bevorzugung, 10, 20, 30, vorzugsweise größer gleich 50, bevorzugter größer gleich 150, und kleiner gleich, in absteigender Reihenfolge der Bevorzugung, 1200, 1000, 950, vorzugsweise kleiner gleich 910, bevorzugter kleiner gleich 850 ist;
c) einen speziellen adsorbierenden Füllstoff, dessen Ölabsorption (OA) - gemäß ISO 787/5 und in g/100 g - größer gleich, in aufsteigender Reihenfolge der Bevorzugung: 1; 5; 10; 20 beträgt; wobei der spezielle adsorbierende Füllstoff c) aus Alumosilikaten, kalkhaltigen Füllstoffen oder Marmorfüllstoffen und Mischungen daraus ausgewählt ist;
d) gegebenenfalls einen Zuschlagstoff;
e) gegebenenfalls ein wasserspeicherndes Mittel;
f) gegebenenfalls ein Rheologieadditiv;
g) gegebenenfalls einen Entschäumer;
h) gegebenenfalls ein Biozid;
i) gegebenenfalls ein Pigment,
j) gegebenenfalls Fasern,
l) gegebenenfalls einen Flammhemmer (oder ein flammfestes Mittel).

2. Redispergierbare trockene Polymerdeckanstrichzusammensetzung nach Anspruch 1, umfassend:
a) ein pulverförmiges organisches Bindemittel, das ein Polymer aufweist, das durch Sprühtrocknen oder Gefriertrocknen einer Dispersion erhalten wird, die das Polymer und ein Schutzkolloid enthält;
b) ein Entschützungsmittel;
c) einen speziellen adsorbierenden Füllstoff;
d) einen Zuschlagstoff;
e) ein wasserspeicherndes Mittel;
f) gegebenenfalls ein Rheologieadditiv;
g) gegebenenfalls einen Entschäumer;
h) gegebenenfalls ein Biozid;
i) gegebenenfalls ein Pigment.

3. Zusammensetzung nach Anspruch 1, wobei das Bindemittel a) ein Homopolymer oder Copolymer ist, das aus der Gruppe ausgewählt ist, die Folgendes umfasst, vorzugsweise aus Folgendem besteht: Acryl, Styrol/Acryl, Styrol/Butadien, Ethylen-Vinylacetat, Vinylacetat/Versatat und Vinylacetat/Versatat/Ethylenpolymer, wobei Acryl/AcrylCopolymer bevorzugt ist.

4. Zusammensetzung nach einem der vorhergehenden Ansprüche, wobei das Verhältnis als Prozentsatz der Trockenmasse *Entschützungsmittel b)*100* /*Polymer a)* größer gleich, in einer aufsteigenden Reihenfolge der Bevorzugung, 1, 8, 10, 15, 20, 30 beträgt, vorzugsweise zwischen 15 und 25 liegt.

5. Zusammensetzung nach einem der vorhergehenden Ansprüche, wobei der Zuschlagstoff d) aus der Gruppe von kalkhaltigen und/oder silikatischen Sanden und/oder Vermiculit und/oder Perlit ausgewählt ist.

## Revendications

1. Composition sèche redispersible exempte de ciment et exempte de chaux de finition polymère, les termes « exempte de ciment et exempte de chaux » signifiant que la concentration de ciment ou la concentration de chaux est inférieure ou égale à 5 % en poids, la finition polymère comprenant :
a) un liant organique pulvérulent comprenant un polymère obtenu par séchage par pulvérisation ou lyophilisation d'une dispersion contenant ledit polymère et un colloïde protecteur qui est un poly(alcool vinylique), ou un composé actif en surface à bas poids moléculaire, ou choisi dans le groupe de sels de condensats d'acide arylsulfonique-formaldéhyde ;
b) un agent de déprotection choisi
- parmi ceux qui sont efficaces sans augmenter le pH de la dispersion obtenue en mélangeant ladite composition avec de l'eau, à une valeur supérieure ou égale à 10 et préférablement supérieure ou égale à 9,
- et dans le groupe de produits constitués par des éthers de glycol, le triphosphate de sodium ; les éthers de glycol étant plus préférablement choisis dans le groupe constitué par le monométhyléther d'éthylèneglycol, le monoéthyléther d'éthylène glycol, le monopropyléther d'éthylène glycol, le monoisopropyléther d'éthylène glycol, le (2-isopropoxy)éthanol, le monobutyléther d'éthylène glycol, le monophényléther d'éthylène glycol, le monobenzyléther d'éthylène glycol, le monométhyléther de diéthylène glycol, le 2-(2-méthoxyéthoxy)éthanol, le méthylcarbitol, le monoéthyléther de diéthylène glycol, le 2-(2-éthoxyéthoxy)éthanol, le carbitol, le cellosolve, le mono-n-butyléther de diéthylèneglycol, le diméthyléther d'éthylène glycol, le diéthyléther d'éthylène glycol, le dibutyléther d'éthylène glycol, l'acétate de méthyléther d'éthylène glycol, l'acétate de monoéthyléther d'éthylène glycol, l'acétate de monobutyléther d'éthylène glycol, le n-butyléther de tripropylène glycol, le n-butyléther de dipropylène glycol, le monobutyléther de triéthylène glycol, le propylène glycol ;
- le rapport de % en masse sèche de *charge spécifique c) *100*/*polymère a)* qui est supérieur ou égal à, dans un ordre de préférence croissant, 10, 20, 30, préférablement supérieur ou égal à 50, plus préférablement supérieur ou égal à 150, et inférieur ou égal à, dans un ordre de préférence décroissant, 1 200, 1 000, 950, préférablement inférieur ou égal à 910, plus préférablement inférieur ou égal à 850 ;
c) un agent de remplissage adsorbant spécifique dont l'absorption d'huile (OA), selon la norme ISO 787/5 et en g/100 g, est supérieure ou égale à, dans un ordre de préférence croissant : 1 ; 5 ; 10 ; 20 ; l'agent de remplissage adsorbant spécifique c) étant choisi parmi les agents de remplissage de type aluminosilicates, calcaires et marbre et des mélanges correspondants ;
d) éventuellement une charge ;
e) éventuellement un agent de rétention d'eau ;
f) éventuellement un agent rhéologique ;
g) éventuellement un agent antimousse ;
h) éventuellement un biocide ;
i) éventuellement un pigment,
j) éventuellement des fibres
l) éventuellement un retardateur de flamme (ou un agent ignifuge).

2. Composition sèche redispersible de finition polymère selon la revendication 1 comprenant :
a) un liant organique pulvérulent comprenant un polymère obtenu par séchage par pulvérisation ou lyophilisation d'une dispersion contenant ledit polymère et un colloïde protecteur ;
b) un agent de déprotection ;
c) un agent de remplissage adsorbant spécifique ;
d) une charge ;
e) un agent de rétention d'eau ;
f) éventuellement un agent rhéologique ;
g) éventuellement un antimousse ;
h) éventuellement un biocide ;
i) éventuellement un pigment.

3. Composition selon la revendication 1, le liant a) étant un homopolymère ou copolymère choisi dans le groupe comprenant, préférablement constitué par : des polymères acryliques, de styrène/acrylique, de styrène/butadiène, d'acétate de vinyle/éthylène, d'acétate de vinyle/versatate et d'acétate de vinyle/versatate/éthylène, un copolymère acrylique/acrylique étant préféré.

4. Composition selon l'une quelconque des revendications précédentes, le rapport en % en masse sèche *agent de déprotection b)*1001polymère a)* étant supérieur ou égal à, dans un ordre de préférence croissant, 1, 8, 10, 15, 20, 30, préférablement compris entre 15 et 25.

5. Composition selon l'une quelconque des revendications précédentes, la charge d) étant choisie dans le groupe des sables calcaires et/ou siliceux et/ou la vermiculite et/ou la perlite.
